# EUROPEAN PATENT APPLICATION

(11) **EP 4 400 304 A1**
(43) Date of publication of application: **17.07.2024**
(21) Application number: 23177855.6
(22) Date of filing: 07.06.2023
(51) Int. Cl.: B32B 15/01, A47J 27/00, A47J 36/02, B22D 17/24, B22D 19/14, B23P 15/00, B23K 20/04, B23P 11/00, B32B 15/02, B32B 37/00, B21D 51/22

(54) **CHECKERED COMPOSITE PLATE AND PRODUCTION TECHNOLOGY THEREOF**

(30) Priority: 16.01.2023 CN 202310062124
(71) Applicant: Ningbo Golden Elephant Kitchenware Co., Ltd, Ningbo Zhejiang (CN)
(72) Inventor: Wang, Cheng, Ningbo (CN)
(74) Representative: karo IP

(57) **Abstract**

A checkered composite plate comprises a basal plate and a metal mesh; the material of the basal plate is aluminum; the metal mesh is embedded at the upper end of the basal plate and fixedly connected with the basal plate; the upper end of the metal mesh extends to the upper part of the basal plate; and the metal mesh forms raised checkers above the basal plate. In the checker composite plate of the present invention, the metal mesh is compounded on the upper end of the basal plate made of aluminum, so that the surface hardness of the aluminum basal plate is enhanced, thereby solving the defect that the aluminum basal plate is soft and not wear-resistant, solving the defect that the common composite plate is easy to deform when heated due to different stress of different materials, achieving good stability and prolonging the service life of the pot. Meanwhile, the present invention has the advantage of rapid heat conduction of the aluminum basal plate, can be used in the field of non-stick pans for eliminating the limitation that the non-stick pans may not use a shovel so that the pans are healthier, and is simple in technology to increase production efficiency.

## Description

### Technical Field

The present invention relates to the technical field of composite plates, and particularly relates to a checkered composite plate and a production technology thereof.

### Background

An aluminum pot is generally made of aluminum plates by pressing, and is a light, durable, fast-heating, uniform-heat conduction and rustless pot. However, the aluminum pot also has defects. Firstly, the aluminum pot is not hard enough and is easy to be worn and striated; once an oxide film or coating is damaged, aluminum is easy to dissolve into the held food; and high aluminum intake leads to dementia. Secondly, when the thickness of the bottom of the pot is insufficient, the bottom is deformed by high temperature heating, and the oxide film on the surface is damaged. In addition, if there is no non-stick coating on the inner surface of the pot, the pot is rough, and adheres to food which is not easy to clean during cooking. Thus, various improved aluminum pot products are continuously developed.

To satisfy different needs, the aluminum plates and metal plates of different materials can be manufactured into a composite plate through extrusion compounding, and the composite plate is used for manufacturing a pot. The pot made of the composite plate can have the effects of magnetic conductivity and hard texture, but when the composite plate is heated, it is easy to cause the hot deformation of the pot due to different stress of different materials. The heat conductivity coefficient of the compounded different metal materials is generally less than that of aluminum, causing that the heat conductivity speed of the pot is slowed down. The existing pot satisfies the non-stick requirements of a pot body generally by coating a non-stick coating in the pot body, but when the pot body is used with a shovel, it is easy to cause the coating to fall off and reduce the service life.

### Summary

A technical problem to be solved by the present invention is to provide a checkered composite plate having strong hardness, good thermal stability, rapid heat conduction and use with a shovel with respect to the problems of the prior art.

Technical solutions adopted to solve the above technical problems by the present invention are as follows:
A checkered composite plate comprises a basal plate and a metal mesh; the material of the basal plate is aluminum; the metal mesh is embedded at the upper end of the basal plate and fixedly connected with the basal plate; the upper end of the metal mesh extends to the upper part of the basal plate; and the metal mesh forms raised checkers above the basal plate.

Preferably, the connecting mode of the basal plate and the metal mesh comprises compression connection and casting connection.

Preferably, the metal mesh comprises a metal mesh formed by metal plate stamping, a metal mesh formed by metal plate rolling, a metal mesh woven by metal wires and a metal mesh welded by metal wires.

Preferably, the mesh hole shape of the metal mesh comprises a polygon and a circle.

Preferably, the polygon comprises a rhombus, a square and a triangle.

Preferably, the material of the metal mesh comprises stainless steel, titanium and iron.

Preferably, the stainless steel comprises 430 stainless steel, 304 stainless steel and 316 stainless steel.

A production technology of the checker composite plate comprises the following steps:
1) manufacturing the metal mesh;
2) compounding the metal mesh on the upper end of the basal plate made of aluminum; embedding the metal mesh at the upper end of the basal plate; making the upper end of the metal mesh extend to the upper part of the basal plate; and forming raised checkers above the basal plate.

Preferably, in the step 1), a manufacturing method of the metal mesh comprises stamping metal plates to form a metal mesh, rolling metal plates to form a metal mesh, weaving metal wires into a metal mesh and welding metal wires into a metal mesh.

Preferably, in the step 2), a compounding method of the metal mesh and the basal plate comprises compounding the metal mesh and an aluminum plate by stamping into a checker composite plate, rolling and compounding the metal mesh and the aluminum plate into a checker composite plate, melting the aluminum into aluminum water and casting the aluminum water on the metal mesh to form a checker composite plate.

Preferably, a method for melting the aluminum into aluminum water and casting the aluminum water on the metal mesh comprises: fixing the metal mesh at the bottom of a sealing mold, melting the aluminum into aluminum water, then adding the aluminum water to a die casting machine, injecting the aluminum water by the die casting machine into the sealing mold with the metal mesh at the bottom, filling the sealing mold with the aluminum water, and cooling to obtain the checker composite plate.

Compared with the prior art, the present invention has the following beneficial effects:
In the checker composite plate of the present invention, the metal mesh is compounded on the upper end of the basal plate made of aluminum, and the metal mesh forms the raised checkers above the aluminum basal plate so that the surface hardness of the aluminum basal plate is enhanced, thereby solving the defect that the aluminum basal plate is soft and not wear-resistant, solving the defect that the common composite plate is easy to deform when heated due to different stress of different materials, achieving good stability and prolonging the service life of the pot. Meanwhile, the present invention has the advantage of rapid heat conduction of the aluminum basal plate, can be used in the field of non-stick pans for eliminating the limitation that the non-stick pans may not use a shovel so that the pans are healthier, and is simple in technology to increase production efficiency.

### Description of Drawings

Fig. 1 is a three-dimensional schematic diagram of a checker composite plate in embodiment 1 of a checker composite plate and a production technology thereof in the present invention.
Fig. 2 is a front view of a checker composite plate in embodiment 1 of a checker composite plate and a production technology thereof in the present invention.
Fig. 3 is a three-dimensional schematic diagram of a checker composite plate in embodiment 3 of a checker composite plate and a production technology thereof in the present invention.
Fig. 4 is a front view of a checker composite plate in embodiment 3 of a checker composite plate and a production technology thereof in the present invention.
Fig. 5 is a three-dimensional schematic diagram of a checker composite plate in embodiment 2 of a checker composite plate and a production technology thereof in the present invention.
Fig. 6 is a front view of a checker composite plate in embodiment 2 of a checker composite plate and a production technology thereof in the present invention.

Reference signs: 1 metal mesh; 2 basal plate.

### Detailed Description

The present invention is further described below in detail in combination with the drawings and embodiments.

### Embodiment 1

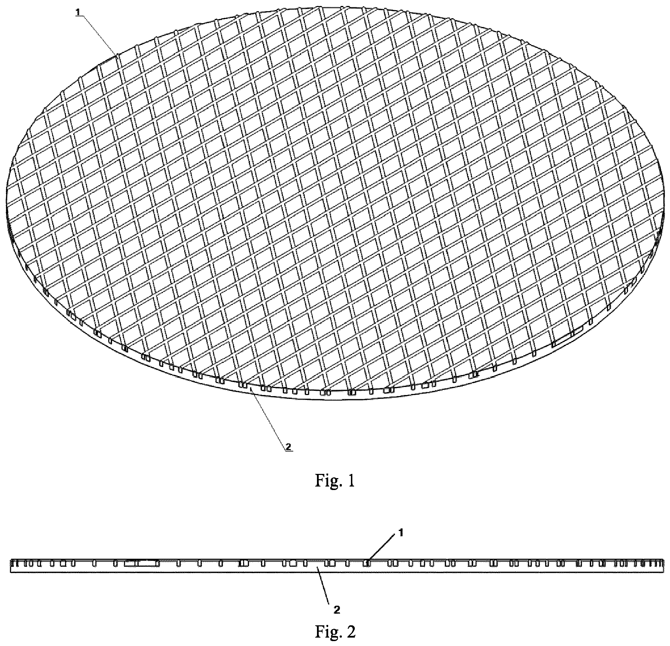

As shown in Fig. 1 to Fig. 2, a checkered composite plate comprises a basal plate 2 and a metal mesh 1; the material of the basal plate 2 is aluminum; the basal plate 2 and the metal mesh 1 are round; the metal mesh 1 is a metal mesh 1 formed by metal plate stamping; the material of the metal mesh 1 is 304 stainless steel; the mesh hole shape of the metal mesh 1 is a rhombus; the metal mesh 1 is embedded at the upper end of the basal plate 2 by stamping; the basal plate 2 is in interference fit with the metal mesh 1 so that the metal mesh 1 is fixedly connected to the basal plate 2; the upper end of the metal mesh 1 extends to the upper part of the basal plate 2; and the metal mesh 1 forms raised checkers above the basal plate 2.

A production technology of the checker composite plate comprises the following steps:
1) stamping 304 stainless steel plates to form a metal mesh 1;
2) compounding the metal mesh 1 on the upper end of the basal plate 2 made of aluminum; embedding the metal mesh 1 at the upper end of the basal plate 2; making the upper end of the metal mesh 1 extend to the upper part of the basal plate 2; and forming raised checkers above the basal plate 2; and a compounding method of the metal mesh 1 and the basal plate 2 comprises: arranging the metal mesh 1 above an aluminum plate in parallel, and compounding the metal mesh 1 and the aluminum plate by stamping to obtain a checker composite plate.

In use, the checker composite plate can be pressed into a pot body or pot bottom so that the raised checkers above the basal plate are located on the inner surface of a pot. When a spatula is used for cooking, the spatula may not be in direct contact with the aluminum basal plate, but is in contact with the raised checkers, which can prevent the deformation of the aluminum basal plate, reduce the precipitation of aluminum elements, prolong the service life of the pot and make the pot healthier. A non-stick coating can also be sprayed above the aluminum basal plate. Because the raised checkers are arranged in the pot, the spatula may not scrape off the non-stick coating above the aluminum basal plate.

In the checker composite plate of the present invention, the metal mesh is compounded on the upper end of the basal plate made of aluminum, and the metal mesh forms the raised checkers above the aluminum basal plate so that the surface hardness of the aluminum basal plate is enhanced, thereby solving the defect that the aluminum basal plate is soft and not wear-resistant, solving the defect that the common composite plate is easy to deform when heated due to different stress of different materials, achieving good stability and prolonging the service life of the pot. Meanwhile, the present invention has the advantage of rapid heat conduction of the aluminum basal plate, can be used in the field of non-stick pans for eliminating the limitation that the non-stick pans may not use a shovel so that the pans are healthier, and is simple in technology to increase production efficiency.

### Embodiment 2

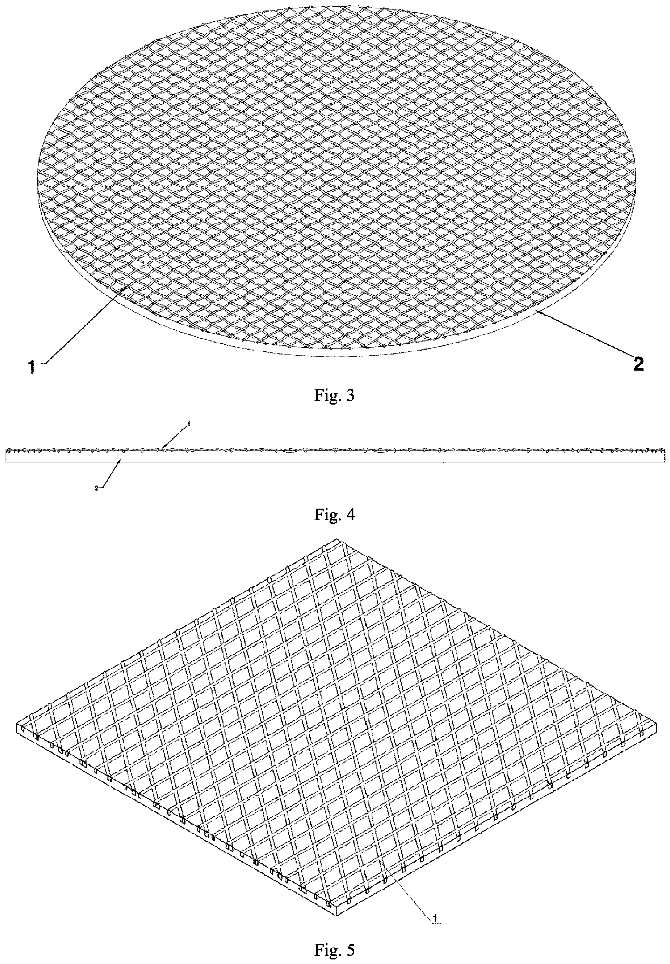

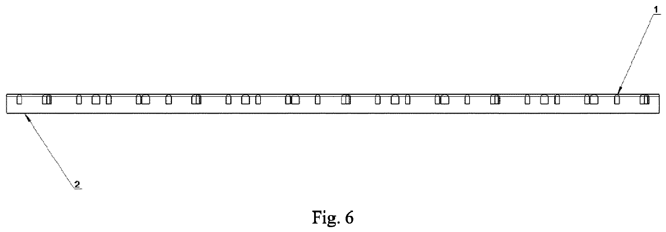

As shown in Fig. 5 and Fig. 6, a checkered composite plate comprises a metal mesh 1 and a basal plate 2 compounded on the middle lower part of the metal mesh 1 by casting; the material of the basal plate is aluminum; the metal mesh 1 and the basal plate 2 are square; the material of the metal mesh 1 is 430 stainless steel; the metal mesh 1 is a metal mesh 1 formed by metal plate rolling; the mesh hole shape of the metal mesh 1 is a rhombus; the metal mesh 1 is embedded at the upper end of the basal plate 2 and fixedly connected with the basal plate 2; the upper end of the metal mesh 1 extends to the upper part of the basal plate 2; and the metal mesh 1 forms raised checkers above the basal plate 2.

A production technology of the checker composite plate comprises the following steps:
1) rolling 430 stainless steel plates to form a metal mesh 1;
2) compounding the basal plate 2 made of aluminum on the lower end of the metal mesh 1; embedding the lower end of the metal mesh 1 into the basal plate 2; making the upper end of the metal mesh 1 extend to the upper part of the basal plate 2; and forming raised checkers above the basal plate 2; and a compounding method of the metal mesh 1 and the basal plate 2 comprises: fixing the metal mesh 1 at the bottom of a sealing mold, melting the aluminum into aluminum water, then adding the aluminum water to a die casting machine, injecting the aluminum water by the die casting machine into the sealing mold with the metal mesh 1 at the bottom, filling the sealing mold with the aluminum water, and cooling to obtain the checker composite plate.

In use, the checker composite plate can be pressed into a pot body or pot bottom so that the raised checkers above the basal plate are located on the inner surface of a pot. When a spatula is used for cooking, the spatula may not be in direct contact with the aluminum basal plate, but is in contact with the raised checkers, which can prevent the deformation of the aluminum basal plate, reduce the precipitation of aluminum elements, prolong the service life of the pot and make the pot healthier. A non-stick coating can also be sprayed above the aluminum basal plate. Because the raised checkers are arranged in the pot, the spatula may not scrape off the non-stick coating above the aluminum basal plate.

In the checker composite plate of the present invention, the metal mesh is compounded on the upper end of the basal plate made of aluminum, and the metal mesh forms the raised checkers above the aluminum basal plate so that the surface hardness of the aluminum basal plate is enhanced, thereby solving the defect that the aluminum basal plate is soft and not wear-resistant, solving the defect that the common composite plate is easy to deform when heated due to different stress of different materials, achieving good stability and prolonging the service life of the pot. Meanwhile, the present invention has the advantage of rapid heat conduction of the aluminum basal plate, can be used in the field of non-stick pans for eliminating the limitation that the non-stick pans may not use a shovel so that the pans are healthier, and is simple in technology to increase production efficiency.

### Embodiment 3

As shown in Fig. 3 to Fig. 4, a checkered composite plate comprises a basal plate 2 and a metal mesh 1 which is in compression connection to the upper end of the basal plate 2; the material of the basal plate is aluminum; the basal plate 2 and the metal mesh 1 are round; the material of the metal mesh 1 is 316 stainless steel; the metal mesh 1 is a metal mesh 1 formed by metal wire weaving; the mesh hole shape of the metal mesh 1 is a square; the metal mesh 1 is embedded at the upper end of the basal plate 2 and fixedly connected with the basal plate 2; the upper end of the metal mesh 1 extends to the upper part of the basal plate 2; and the metal mesh 1 forms raised checkers above the basal plate 2.

A production technology of the checker composite plate comprises the following steps:
1) weaving metal wires into a metal mesh 1, wherein the material of the metal wires is 316 stainless steel;
2) compounding the basal plate 2 made of aluminum on the lower end of the metal mesh 1; embedding the lower end of the metal mesh 1 into the basal plate 2; making the upper end of the metal mesh 1 extend to the upper part of the basal plate 2; and forming raised checkers above the basal plate 2; and a compounding method of the metal mesh 1 and the basal plate 2 comprises: arranging the metal mesh 1 above an aluminum plate in parallel, and compounding the metal mesh 1 and the aluminum plate by rolling to obtain a checker composite plate.

In use, the checker composite plate can be pressed into a pot body or pot bottom so that the raised checkers above the basal plate are located on the inner surface of a pot. When a spatula is used for cooking, the spatula may not be in direct contact with the aluminum basal plate, but is in contact with the raised checkers, which can prevent the deformation of the aluminum basal plate, reduce the precipitation of aluminum elements, prolong the service life of the pot and make the pot healthier. A non-stick coating can also be sprayed above the aluminum basal plate. Because the raised checkers are arranged in the pot, the spatula may not scrape off the non-stick coating above the aluminum basal plate.

In the checker composite plate of the present invention, the metal mesh is compounded on the upper end of the basal plate made of aluminum, and the metal mesh forms the raised checkers above the aluminum basal plate so that the surface hardness of the aluminum basal plate is enhanced, thereby solving the defect that the aluminum basal plate is soft and not wear-resistant, solving the defect that the common composite plate is easy to deform when heated due to different stress of different materials, achieving good stability and prolonging the service life of the pot. Meanwhile, the present invention has the advantage of rapid heat conduction of the aluminum basal plate, can be used in the field of non-stick pans for eliminating the limitation that the non-stick pans may not use a shovel so that the pans are healthier, and is simple in technology to increase production efficiency.

### Embodiment 4

A checkered composite plate comprises a metal mesh and a basal plate which is cast on the middle lower part of the metal mesh; the material of the basal plate is aluminum; the material of the metal mesh is titanium; the metal mesh is a metal mesh formed by metal wire welding; the mesh hole shape of the metal mesh is a triangle; the metal mesh is embedded at the upper end of the basal plate and fixedly connected with the basal plate; the upper end of the metal mesh extends to the upper part of the basal plate; and the metal mesh forms raised checkers above the basal plate.

A production technology of the checker composite plate comprises the following steps:
1) welding metal wires into a metal mesh, wherein the material of the metal wires is titanium;
2) compounding the metal mesh on the upper end of the basal plate made of aluminum; embedding the metal mesh at the upper end of the basal plate; making the upper end of the metal mesh extend to the upper part of the basal plate; and forming raised checkers above the basal plate; and a compounding method of the metal mesh and the basal plate comprises: fixing the metal mesh at the bottom of a sealing mold, melting the aluminum into aluminum water, then adding the aluminum water to a die casting machine, injecting the aluminum water by the die casting machine into the sealing mold with the metal mesh at the bottom, filling the sealing mold with the aluminum water, and cooling to obtain the checker composite plate.

In use, the checker composite plate can be pressed into a pot body or pot bottom so that the raised checkers above the basal plate are located on the inner surface of a pot. When a spatula is used for cooking, the spatula may not be in direct contact with the aluminum basal plate, but is in contact with the raised checkers, which can prevent the deformation of the aluminum basal plate, reduce the precipitation of aluminum elements, prolong the service life of the pot and make the pot healthier. A non-stick coating can also be sprayed above the aluminum basal plate. Because the raised checkers are arranged in the pot, the spatula may not scrape off the non-stick coating above the aluminum basal plate.

In the checker composite plate of the present invention, the metal mesh is compounded on the upper end of the basal plate made of aluminum, and the metal mesh forms the raised checkers above the aluminum basal plate so that the surface hardness of the aluminum basal plate is enhanced, thereby solving the defect that the aluminum basal plate is soft and not wear-resistant, solving the defect that the common composite plate is easy to deform when heated due to different stress of different materials, achieving good stability and prolonging the service life of the pot. Meanwhile, the present invention has the advantage of rapid heat conduction of the aluminum basal plate, can be used in the field of non-stick pans for eliminating the limitation that the non-stick pans may not use a shovel so that the pans are healthier, and is simple in technology to increase production efficiency.

### Embodiment 5

A checkered composite plate comprises a basal plate and a metal mesh which is compounded on the upper end of the basal plate by rolling; the material of the basal plate is aluminum; the material of the metal mesh is iron; the metal mesh is a metal mesh formed by metal plate stamping; the mesh hole shape of the metal mesh is a circle; the metal mesh is embedded at the upper end of the basal plate and fixedly connected with the basal plate; the upper end of the metal mesh extends to the upper part of the basal plate; and the metal mesh forms raised checkers above the basal plate.

A production technology of the checker composite plate comprises the following steps:
1) stamping metal plates to form a metal mesh, wherein the material of the metal plates is iron;
2) compounding the metal mesh on the upper end of the basal plate made of aluminum; embedding the metal mesh at the upper end of the basal plate; making the upper end of the metal mesh extend to the upper part of the basal plate; and forming raised checkers above the basal plate; and a compounding method of the metal mesh and the basal plate comprises: arranging the metal mesh above an aluminum plate in parallel, and compounding the metal mesh and the aluminum plate by rolling to obtain a checker composite plate.

In use, the checker composite plate can be pressed into a pot body or pot bottom so that the raised checkers above the basal plate are located on the inner surface of a pot. When a spatula is used for cooking, the spatula may not be in direct contact with the aluminum basal plate, but is in contact with the raised checkers, which can prevent the deformation of the aluminum basal plate, reduce the precipitation of aluminum elements, prolong the service life of the pot and make the pot healthier. A non-stick coating can also be sprayed above the aluminum basal plate. Because the raised checkers are arranged in the pot, the spatula may not scrape off the non-stick coating above the aluminum basal plate.

In the checker composite plate of the present invention, the metal mesh is compounded on the upper end of the basal plate made of aluminum, and the metal mesh forms the raised checkers above the aluminum basal plate so that the surface hardness of the aluminum basal plate is enhanced, thereby solving the defect that the aluminum basal plate is soft and not wear-resistant, solving the defect that the common composite plate is easy to deform when heated due to different stress of different materials, achieving good stability and prolonging the service life of the pot. Meanwhile, the present invention has the advantage of rapid heat conduction of the aluminum basal plate, can be used in the field of non-stick pans for eliminating the limitation that the non-stick pans may not use a shovel so that the pans are healthier, and is simple in technology to increase production efficiency.

Finally, it should be noted that the above embodiments are only used for describing the technical solutions of the present invention rather than limitation. Although the present invention is described in detail by referring to the above embodiments, those ordinary skilled in the art should understand that: the technical solution recorded in each of the above embodiments can be still amended, or some technical features therein can be replaced equivalently. However, these amendments or replacements do not enable the essence of the corresponding technical solutions to depart from the spirit and the scope of the technical solutions of various embodiments of the present invention.

## Claims

1. A checkered composite plate, comprising a basal plate and a metal mesh, wherein the material of the basal plate is aluminum; the metal mesh is embedded at the upper end of the basal plate and fixedly connected with the basal plate; the upper end of the metal mesh extends to the upper part of the basal plate; and the metal mesh forms raised checkers above the basal plate.

2. The checkered composite plate according to claim 1, wherein the connecting mode of the basal plate and the metal mesh comprises compression connection and casting connection.

3. The checkered composite plate according to claim 1, wherein the metal mesh comprises a metal mesh formed by metal plate stamping, a metal mesh formed by metal plate rolling, a metal mesh woven by metal wires and a metal mesh welded by metal wires.

4. The checkered composite plate according to claim 1, wherein the mesh hole shape of the metal mesh comprises a polygon and a circle.

5. The checkered composite plate according to any one of claims 1-4, wherein the material of the metal mesh comprises stainless steel, titanium and iron.

6. The checkered composite plate according to claim 5, wherein the stainless steel comprises 430 stainless steel, 304 stainless steel and 316 stainless steel.

7. A production technology for preparing the checker composite plate of any one of claims 1-6, comprising the following steps:
1) manufacturing the metal mesh;
2) compounding the metal mesh on the upper end of the basal plate made of aluminum; embedding the metal mesh at the upper end of the basal plate; making the upper end of the metal mesh extend to the upper part of the basal plate; and forming raised checkers above the basal plate.

8. The production technology of the checker composite plate according to claim 7, wherein in the step 1), a manufacturing method of the metal mesh comprises stamping metal plates to form a metal mesh, rolling metal plates to form a metal mesh, weaving metal wires into a metal mesh and welding metal wires into a metal mesh.

9. The production technology of the checker composite plate according to claim 7, wherein in the step 2), a compounding method of the metal mesh and the basal plate comprises compounding the metal mesh and an aluminum plate by stamping into a checker composite plate, rolling and compounding the metal mesh and the aluminum plate into a checker composite plate, melting the aluminum into aluminum water and casting the aluminum water on the metal mesh to form a checker composite plate.

10. The production technology of the checker composite plate according to claim 9, wherein a method for melting the aluminum into aluminum water and casting the aluminum water on the metal mesh comprises: fixing the metal mesh at the bottom of a sealing mold, melting the aluminum into aluminum water, then adding the aluminum water to a die casting machine, injecting the aluminum water by the die casting machine into the sealing mold with the metal mesh at the bottom, filling the sealing mold with the aluminum water, and cooling to obtain the checker composite plate.
